# EUROPEAN PATENT SPECIFICATION

(11) **EP 2 931 632 B1**
(45) Date of publication and mention of the grant of the patent: **29.03.2017**
(21) Application number: 13818486.6
(22) Date of filing: 16.12.2013
(51) Int. Cl.: B65G 11/08, B65G 11/14, E02D 15/10, F16L 1/12, B63B 35/30

(54) **MARINE FALL PIPE SYSTEM, MARINE VESSEL COMPRISING SUCH FALL PIPE SYSTEM, AND MARINE ROCK PLACEMENT METHOD**
FALLROHRSYSTEM, SCHIFF MIT EINEM SOLCHEN FALLROHRSYSTEM, UND VERFAHREN ZUM PLACIEREN VON STEINBLÖCKEN AUF SEE.
SYSTEM DE MANCHON MARIN, NAVIRE COMPRENANT UN TEL SYSTEM DE MANCHON, ET PROCÉDÉ DE PLACEMENT DE BLOCS ROCHEUX EN MER

(30) Priority: 17.12.2012 NL 2009994
(43) Date of publication of application: 21.10.2015
(73) Proprietor: Van Oord Dredging and Marine Contractors B.V., 3067 GG Rotterdam (NL)
(72) Inventor: VOORMOLEN, Job Reinier, NL-2596 AH Den Haag (NL)
(74) Representative: Nederlandsch Octrooibureau
(86) International application number: PCT/NL2013/050902
(87) International publication number: WO 2014/098576

(56) References cited:
- EP-A1- 0 450 675
- WO-A1-2012/008829
- GB-A- 2 004 817
- US-A- 4 829 923

## Description

### Field of the invention

The invention relates to a fall pipe system for placing rock in selected locations on a sea bed, which may be several hundreds of meters below sea level. The invention also relates to a vessel on which such a fall pipe system is arranged, and to a method for placing rock on a sea bed using such fall pipe system or vessel.

### Background of the invention

Fall pipe systems that are used for placing rock on a sea bed are known. They are generally installed on a dedicated vessel used for marine rock placement purposes. Rock is, for instance, to be placed for protecting and fixing pipelines on the sea bed. Such pipelines are, for instance, used for transporting crude oil from off-shore oil production fields to the main land, for transporting natural gas over the sea bed between countries, and the like. Subsea rock placement is also carried out for sea bed leveling to allow sea bed supported placement of pipe lines, the correct placement of off-shore oil production platform and off-shore windmills, and the like.

The fall pipe systems are employed to depths of several hundreds of meters. However, such lengthy fall pipe system become quite heavy providing an extensive static weight and load on the fall pipe itself, but also on the carrying vessel. In addition to a static load the fall pipe will experience dynamic loads due to water currents. Water currents may be in different directions at various water depths, and may even be directed in opposite directions at two different depths. Such currents will impose very large dynamic loads on the fall pipe. To withstand such dynamic and static loads, the fall pipe should be made strong enough, which may further add to the weight of the fall pipe. These limitations restrict the use of known fall pipe systems to about 1,000 meters.

Marine fall pipe systems are, for instance, disclosed in EP 0 450 675 A1, WO 2009/020385 A1, WO 2010/147460 A1 and EP 2 266 873 A1.

There is a strong demand to employ fall pipe systems at larger depths over 1,000 meters at which known fall-pipe system cannot be employed. Off-shore oil productions platforms are, for instance, being planned for locations at larger water depths. At depths just below 1,000 meters the known fall pipe systems also impose limitations on their practical use due to large static loads.

US 4,829,923 discloses a steel fall pipe made up of sections that are joined together. Buoyant collars around the pipe may be used to reduce the load in the pipe string and on cables supporting the pipe string.

EP 0 450 675 A1 generally discloses a fall pipe system of substantially tubular pipe sections, but without any buoyancy.

GB 2 004 817 A discloses a fall pipe system that provides a telescopic connection with a filling tube end of the fall pipe system. The fall pipe may be made of a material having s specific gravity equal to or smaller than water.

### Summary of the invention

It is an object of the invention to provide a marine fall pipe system and corresponding marine rock placement method, which can be employed at large depths, for instance, over 1,000 meter.

Such object is achieved by a marine fall pipe system constructed for placing blocks of stone and/or rock on a sea bed, the fall pipe system comprising a substantially tubular fall pipe, wherein the fall pipe system comprises buoyancy provided such as to, during use, be arranged along the fall pipe so as to at least partially compensate for a weight of the fall pipe system, the fall pipe system comprising substantially tubular fall pipe sections constructed and arranged for constituting the fall pipe, the buoyancy being associated with one or more fall pipe sections, characterized in that the buoyancy is provided by microspheres integrated in the fall pipe section(s), the microspheres having an effective specific weight (density) below the specific weight of water. Having the buoyancy being associated with one or more tubular fall pipe sections provides an efficient manner to provide buoyancy where required. The microspheres can be made very lightweight and can be effectively incorporated into the fall pipe sections to provide buoyancy.

In a preferred embodiment the buoyancy is provided by microspheres integrated in the fall pipe section(s), the microspheres comprising hollow microspheres, especially hollow glass microspheres. Such hollow spheres provide a large amount of buoyancy per occupied volume. In the event one such hollow sphere would break, the other spheres would still provide buoyancy. Spheres also provide high resistance against external forces, such as due to high pressure at large water depths. In another preferred embodiment the buoyancy is provided such as to, during use, being distributed along the fall pipe, which provides a compensation of the weight of the file pipe system where required.

In a preferred embodiment one or more fall pipe sections (110) with associated buoyancy comprise integral buoyancy, the integral buoyancy being provided integral with the respective fall pipe section(s), which is a very efficient and reliable manner of providing the buoyancy, and does not obstruct functioning of the remainder of the system.

To ensure a proper upward orientation of the fall pipe sections the buoyancy is predominantly provided in, during use, an upper half of the fall pipe section(s).

Most efficiently, the buoyancy is provided at, during use, an upper edge of the fall pipe section(s).

In an effective and efficiently manufactured embodiment the fall pipe section(s) comprise(s) a collar around the fall pipe section(s), the buoyancy being provided in the collar.

In an embodiment the fall pipe section(s) comprise a polyethylene material, which proves to be a reliable and durable material for the purpose.

In an effective embodiment that provides a fall pipe system that is very flexible, the fall pipe sections comprise bottomless buckets having a top side and a bottom side, an external perimeter of the bottom side being smaller than an internal perimeter of the top side, and the fall pipe system comprises a hoisting arrangement to which the buckets are attached such that, during use, a top side of one fall pipe section overlaps a bottom side of an adjacent fall pipe section and the bottom sides tend to face in a downward direction. Preferably the buckets have a substantially conical shape, which are easily manufactured and are easily nested to occupy less space when stored.

In a further effective embodiment the hoisting arrangement comprises at least one cable or chain to which the buckets are attached, and/or the fall pipe system comprises chains or cables interconnecting adjacent buckets. The cables or chains provide a reliable and effective means for hoisting while also providing flexibility.

An embodiment of the fall pipe system comprises a driving arrangement for moving a, during use, bottom end of the fall pipe in a direction substantially along the sea bed for accurate positioning of rock being placed using the fall pipe system.

In another aspect the invention provides for a marine vessel comprising a fall pipe system as disclosed above.

In yet another aspect the invention provides for a rock placement method for placing block of stone and/or rock on a sea bed, wherein the method comprises providing a fall pipe system comprising a substantially tubular fall pipe, the fall pipe system comprising buoyancy provided such as to, during use, be arranged along the fall pipe so as to at least partially compensate for a weight of the fall pipe system, the fall pipe system being a fall pipe system as disclosed above; providing the fall pipe system on a marine vessel; travelling the marine vessel to a marine location where block of stone and/or rock are to be placed on the sea bed; and providing block of stone and/or rock (R) in a location on the sea bed using the fall pipe system.

### Brief description of the drawings

The invention will further be explained with reference to the accompanying drawings in which like or same reference symbols denote like, same or corresponding parts, and in which
Figure 1 shows part of a vessel carrying a fall pipe system according to the invention;
Figure 2 shows a detail of the fall pipe system of figure 1; and
Figure 3 schematically shows a large-scale view of a marine vessel provided with a fall pipe system according to the invention.

### Detailed description of embodiments

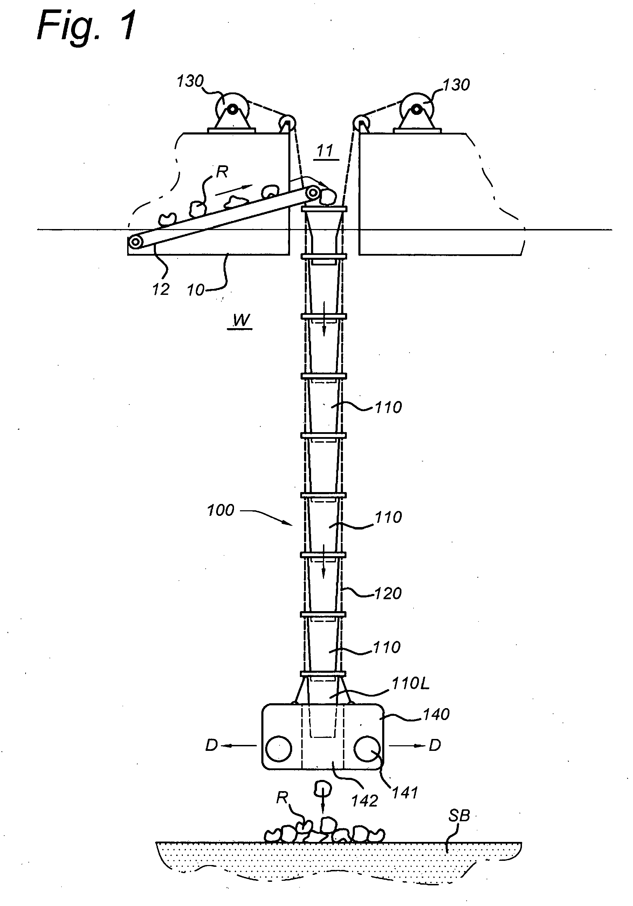

Figure 1 shows part of a marine vessel 10 on which a fall pipe system 100 is arranged. A fall pipe made up of various fall pipe sections 110 suspends down from the vessel through a shaft 11 in the vessel to a large depth just above a sea bed SB. Blocks of stone and/or rock R are provided by a conveyer 12 arranged on the vessel to a top end of the fall pipe and subsequently drop down the tubular fall pipe, as indicated by unlabelled arrows shown above the conveyer and within the fall pipe. The blocks of stone and/or rock R then leave the last fall pipe section 110L of the fall pipe to be positioned on the sea bed SB.

A driver arrangement 140 is provided at the end of the fall pipe for positioning the end of the fall pipe at the correct position of the sea bed. The driver arrangement comprises drivers 141 for positioning the driver arrangement together with the end of the fall pipe along the sea bed SB as indicated by arrows D. The driver arrangement further has a shaft 142 for accommodating the fall pipe and/or for passing blocks of stone and/or rock from the end of the fall pipe towards the sea bed. The driver arrangement is shown to be attached to the last fall pipe section 110L, but it can also be attached to a fall pipe section further up the fall pipe.

The tubular fall pipe sections 110 are connected to one another by chains or steel cables 120, which also serve to lift and lower the file pipe using hoisting arrangement 130 on the marine vessel 10 through shaft 11. Individual fall pipe sections may be added and connected to the steel cables or chains 120 at the top end of the fall pipe, as required, when the fall pipe is lowered and disconnected and removed again when the fall pipe is being lifted. Any other suitable manner of providing or storing the fall pipe sections may be employed as well.

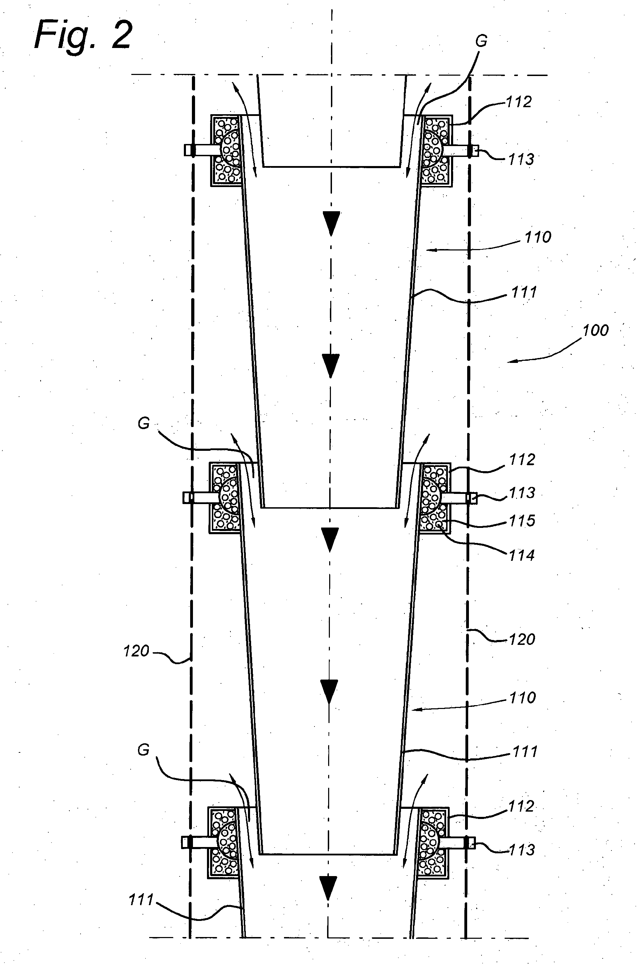

Figure 2 shows some fall pipe sections 110 with connecting steel cables or chains 120 in more detail. A fall pipe section 110 comprises a substantially conical shaped bottomless bucket 111. The bottomless buckets can be made of a linear medium density grade polyethylene like, for instance Rigidex HD3850UA, supplied in pellet form for use in a rotational molding process to actually manufacture the bucket. The density is about 938 kg/m³ according to ISO 1872/1-1993. The bottomless buckets 111 are attached to the steel cables or chains 120 such that a top side or end of one bucket 111 overlaps with a bottom side or end of an adjacent bottomless bucket 111. An external perimeter and cross-section of the bottom side of the buckets 111 is smaller than an internal perimeter and cross-section of the top side of the buckets such that a gap G is left open between the top side of one bucket and the bottom side of an adjacent bucket. Water may flow through the gaps G as indicated by the arrows. One bucket projects into an adjacent bucket that is neighboring below. Such configuration guarantees a reliable transport of rock downwards, while providing a flexible fall pipe system made up from the bottomless buckets 111. The conical shape of the buckets also allows the buckets to be nested into one another for the reduction of storage space.

At their top sides the buckets have a collar 112 from which a pin 113 projects. The pin 113 comprises some arrangement for attachment to the steel cable or chain 120, which is known as such. The attachment of pin 113 to steel cable or chain 120 is such that the bottomless bucket suspends from the cables or chains 120. A position of a fall pipe segment 110 is therefore fixed with respect the cables or chains 120 and substantially fixed with respect to adjacent fall pipe sections although it allows some movement of adjacent fall pipe sections 110 with respect to one another for providing flexibility to the fall pipe.

The collar 113 provided at the upper edge of the bucket is filled with a mixture of hollow glass microspheres 114 and resin 115 in between the microspheres. A bucket 111 can be manufactured with a hollow collar 113 by an injection molding process. Subsequently, the hollow collar can be filled with a mixture of the hollow microspheres and resin, after which the resin is allowed to solidify. The microspheres have an effective specific weight, being the weight of a microsphere divided by its volume, or density that is below the specific density of water such as to provide the buoyancy to the bucket. Especially, a hollow sphere has a very low specific weight, while still providing enough strength to withstand external forces such as compression forces at considerable water depths.

Having a collar 113 with hollow microspheres provides an internal or integral buoyancy to a fall pipe section 110, especially to a top side of the fall pipe section in the embodiment shown. The top half of the fall pipe section will therefore experience more upwards force than the bottom half when provided in water, which assists in a proper orientation of the fall pipe section when suspended in water. Further, a relative upwards force as a result of the integral buoyancy is transmitted through pins 113 to the cables or chains 120. The whole fall pipe system 110 that is suspended in water will therefore experience an upward force as a result of the integral buoyancy. The amount of buoyancy can be chosen such that it partly compensates for a downward force due to the weight of the fall pipe system as experienced when suspended in water. By having the integral buoyancy a much longer fall pipe system can be employed than would be possible without buoyancy, since the effective weight is reduced. The weight of the fall pipe system is due to the weight of the individual fall pipe section 110, of the cables or chains 120 and of the driving arrangement 140.

Each fall pipe section 110 of the fall pipe may be provided with integral buoyancy. However, the fall pipe may also be made up from fall pipe sections having integral buoyancy and fall pipe sections not having integral buoyancy. There may also fall pipe sections having different amounts of integral buoyancy be provided. Such various types of fall pipe sections are to be arranged along the fall pipe such that a fall pipe is made up having a desired distributed buoyancy along the fall pipe. The desired distribution and/or amount of buoyancy may depend on the specific circumstances of the location where stone and/or rock is to be placed using the fall pipe system.

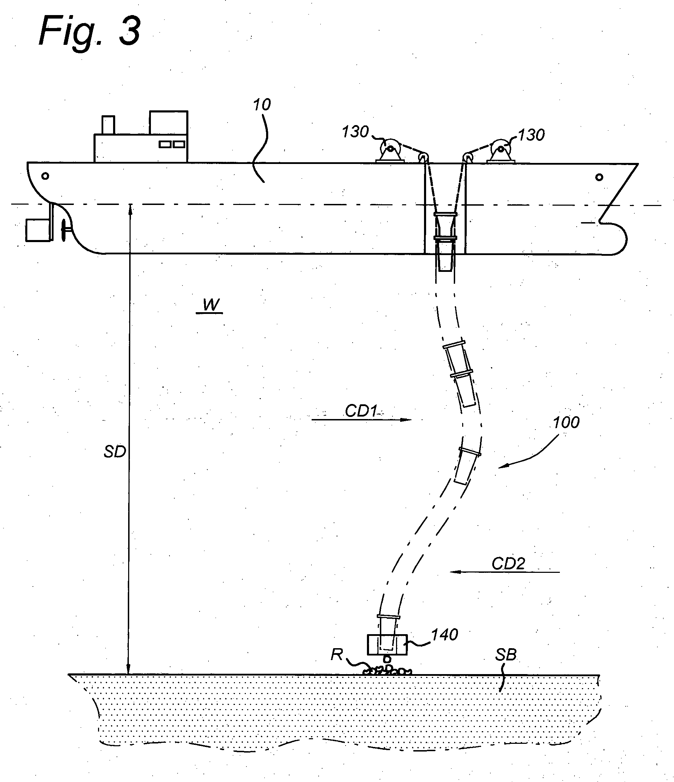

Figure 3 shows a schematic large-scale view of a marine vessel 10 provided with a fall pipe system 100 according to the invention. The vessel is travelled to a location where stone and/or rock is to be placed on the bottom of the sea. The stone and/or rock may be taken with the vessel, provided by another vessel or supplied in another suitable manner. At the desired location the stone or rock is provided to the sea bed using the fall pipe system. The blocks of stone and/or rock R are placed at a sea depth SD of about 1,500 meter in the example shown, at which depth the fall pipe system according to the invention can be employed whereas known system provide too large static loads to be used at such depths. Figure 3 also shows the influence of dynamic loads due to, for instance, water currents. The example of figure 3 shows one current closer to sea level in a direction CD1 and another water current near to the sea bed SB in an opposite direction CD2. Such water currents may pose large dynamics loads on the fall pipe system, which can be handled by the fall pipe system as disclosed.

An embodiment of the invention has been disclosed with one specific type of fall pipe and fall pipe sections. The invention may be employed with other types of fall pipes and fall pipe sections as well. Various other embodiments of the invention will be apparent to the skilled person when having read the above disclosure in connection with the drawings.

## Claims

1. A marine fall pipe system (100) constructed for placing blocks of stone and/or rock (R) on a sea bed (SB), the fall pipe system comprising a substantially tubular fall pipe, wherein the fall pipe system comprises buoyancy provided such as to, during use, be arranged along the fall pipe so as to at least partially compensate for a weight of the fall pipe system, the fall pipe system (100) comprising substantially tubular fall pipe sections (110) constructed and arranged for constituting the fall pipe, the buoyancy being associated with one or more fall pipe sections, **characterized in that** the buoyancy is provided by microspheres (114) integrated in the fall pipe section(s), the microspheres having an effective specific weight below the specific weight of water.

2. The fall pipe system according to claim 1, wherein the buoyancy is provided by microspheres (114) integrated in the fall pipe section(s), the microspheres comprising hollow microspheres (114), especially hollow glass microspheres (114).

3. The fall pipe system according to claim 1 or 2, wherein the buoyancy is provided such as to, during use, being distributed along the fall pipe.

4. The fall pipe system according to any one of the preceding claims,
wherein the one or more fall pipe sections (110) with associated buoyancy comprise integral buoyancy, the integral buoyancy being provided integral with the respective fall pipe section(s).

5. The fall pipe system according to any one of the preceding claims,
wherein the buoyancy is predominantly provided in, during use, an upper half of the fall pipe section(s) (110).

6. The fall pipe system according to claim 5, wherein the buoyancy is provided at, during use, an upper edge of the fall pipe section(s) (110).

7. The fall pipe system according to any one of the preceding claims, wherein the fall pipe section(s) (110) comprise(s) a collar (112) around the fall pipe section(s), the buoyancy being provided in the collar.

8. The fall pipe system according to any one of the preceding claims,
wherein the fall pipe section(s) (110) comprise a polyethylene material.

9. The fall pipe system according to any one of the preceding claims,
wherein the fall pipe sections (110) comprise bottomless buckets (111) having a top side and a bottom side, an external perimeter of the bottom side being smaller than an internal perimeter of the top side, and the fall pipe system (100) comprises a hoisting arrangement (130) to which the buckets are attached such that, during use, a top side of one fall pipe section overlaps a bottom side of an adjacent fall pipe section and the bottom sides tend to face in a downward direction.

10. The fall pipe system according to claim 9, wherein the buckets (111) have a substantially conical shape.

11. The fall pipe system according to claim 9 or 10, wherein the hoisting arrangement (130) comprises at least one cable or chain (120) to which the buckets (111) are attached, and/or the fall pipe system (100) comprises chains or cables (120) interconnecting adjacent buckets.

12. The fall pipe system according to any one of the preceding claims,
wherein the fall pipe system (100) comprises a driving arrangement (140) for moving a, during use, bottom end of the fall pipe in a direction substantially along the sea bed (SB).

13. A marine vessel (10) comprising a fall pipe system (100) according to any one of the preceding claims.

14. A marine rock placement method for placing block of stone and/or rock on a sea bed (SB), wherein the method comprises
- providing a fall pipe system (100) comprising a substantially tubular fall pipe, the fall pipe system comprising buoyancy provided such as to, during use, be arranged along the fall pipe so as to at least partially compensate for a weight of the fall pipe system, the fall pipe system being a fall pipe system according to any one of claims 1 to 12;
- providing the fall pipe system on a marine vessel (10);
- travelling the marine vessel to a marine location where block of stone and/or rock (R) are to be placed on the sea bed (SB); and
- providing block of stone and/or rock (R) in a location on the sea bed using the fall pipe system (100).

## Patentansprüche

1. Meeresfallleitungssystem (100), welches ausgebildet ist zum Platzieren von Steinblöcken und/oder Felsen (R) auf einem Meeresgrund (SB), wobei das Fallleitungssystem eine im Wesentlichen rohrförmige Fallleitung aufweist, wobei das Fallleitungssystem eine Auftriebsvorrichtung aufweist, welche derart vorgesehen ist, dass sie während der Verwendung derart entlang der Fallleitung angeordnet ist, dass sie zumindest teilweise ein Gewicht des Fallleitungssystems kompensiert, wobei das Fallleitungssystem (100) im Wesentlichen rohrförmige Fallleitungsabschnitte (110) aufweist, welche ausgebildet und angeordnet sind zum Bilden der Fallleitung, wobei die Auftriebsvorrichtung einem oder mehreren Fallleitungsabschnitten zugeordnet ist,
**dadurch gekennzeichnet, dass**
die Auftriebsvorrichtung durch Mikrosphären (114) bereitgestellt ist, welche in dem/den Fallleitungsabschnitt(en) integriert sind, wobei die Mikrosphären ein effektives spezifisches Gewicht haben, welches unter dem spezifischen Gewicht von Wasser liegt.

2. Fallleitungssystem gemäß Anspruch 1,
wobei die Auftriebsvorrichtung durch Mikrosphären (114) bereitgestellt ist, welche in dem/den Fallleitungsabschnitt(en) integriert sind, wobei die Mikrosphären hohle Mikrosphären (114), insbesondere hohle Glasmikrosphären (114) aufweisen.

3. Fallleitungssystem gemäß Anspruch 1 oder 2,
wobei die Auftriebsvorrichtung derart vorgesehen ist, dass sie während der Verwendung entlang der Fallleitung verteilt ist.

4. Fallleitungssystem gemäß einem der vorhergehenden Ansprüche, wobei der eine oder die mehreren Fallleitungsabschnitte (110) mit zugeordneter Auftriebsvorrichtung eine integrale Auftriebsvorrichtung aufweisen, wobei die integrale Auftriebsvorrichtung integral mit dem/den entsprechenden Fallleitungsabschnitt(en) vorgesehen ist.

5. Fallleitungssystem gemäß einem der vorhergehenden Ansprüche, wobei die Auftriebsvorrichtung während der Verwendung überwiegend in einer oberen Hälfte des/der Fallleitungsabschnitte(s) (110) vorgesehen ist.

6. Fallleitungssystem gemäß Anspruch 5,
wobei die Auftriebsvorrichtung während der Verwendung an einer oberen Kante des/der Fallleitungsabschnitte(s) (110) vorgesehen ist.

7. Fallleitungssystem gemäß einem der vorhergehenden Ansprüche, wobei der/die Fallleitungsabschnitt(e) (110) einen Kragen (112) um den/die Fallleitungsabschnitt(e) aufweist/aufweisen, wobei die Auftriebsvorrichtung in dem Kragen vorgesehen ist.

8. Fallleitungssystem gemäß einem der vorhergehenden Ansprüche, wobei der/die Fallleitungsabschnitt(e) (110) Polyethylenmaterial aufweist/aufweisen.

9. Fallleitungssystem gemäß einem der vorhergehenden Ansprüche, wobei die Fallleitungsabschnitte (110) einen bodenlosen Behälter (111) aufweisen, welcher eine Oberseite und eine Unterseite aufweist, wobei ein äußerer Umfang der Unterseite kleiner ist als ein innerer Umfang der Oberseite, und wobei das Fallleitungssystem (100) eine Förderanordnung (130) aufweist, an welcher die Behälter derart angebracht sind, dass während der Verwendung eine Oberseite eines Fallleitungsabschnitts eine Unterseite eines angrenzenden Fallleitungsabschnitts überlappt und die Unterseiten dazu neigen, in eine Richtung nach unten zu zeigen.

10. Fallleitungssystem gemäß Anspruch 9,
wobei die Behälter (111) eine im Wesentlichen konische Form aufweisen.

11. Fallleitungssystem gemäß Anspruch 9 oder 10,
wobei die Förderanordnung (130) mindestens ein Kabel oder eine Kette (120) aufweist, an welcher die Behälter (111) angebracht sind, und/oder das Fallleitungssystem (100) Ketten oder Kabel (120) aufweist, welche angrenzende Behälter miteinander verbinden.

12. Fallleitungssystem gemäß einem der vorhergehenden Ansprüche, wobei das Fallleitungssystem (100) eine Antriebsanordnung (140) aufweist zum Bewegen eines unteren Endes der Fallleitung während der Verwendung, und zwar in eine Richtung im Wesentlichen entlang des Meeresgrundes (SB).

13. Seefahrzeug (10), welches ein Fallleitungssystem (100) gemäß einem der vorhergehenden Ansprüche aufweist.

14. Meeresfelsen-Platzierungsverfahren zum Platzieren von Steinblöcken und/oder Felsen auf einem Meeresgrund (SB), wobei das Verfahren folgende Schritte aufweist:
- Bereitstellen eines Fallleitungssystems (100), welches eine im Wesentlichen rohrförmige Fallleitung aufweist, wobei das Fallleitungssystem eine Auftriebsvorrichtung aufweist, welche derart vorgesehen ist, dass sie während der Verwendung derart entlang der Fallleitung angeordnet ist, dass sie zumindest teilweise ein Gewicht des Fallleitungssystems kompensiert, wobei das Fallleitungssystem ein Fallleitungssystem gemäß einem der Ansprüche 1 bis 12 ist;
- Bereitstellen des Fallleitungssystems auf einem Seefahrzeug (10);
- Bewegen des Seefahrzeugs an eine Meeresstelle, an der Steinblöcke und/oder Felsen (R) auf dem Meeresgrund (SB) platziert werden sollen; und
- Bereitstellen von Steinblöcken und/oder Felsen (R) unter Verwendung des Fallleitungssystems (100), und zwar an einer Stelle auf dem Meeresgrund.

## Revendications

1. Système de tuyau de descente marin (100) construit pour mettre en place des blocs de pierre et/ou de roche (R) sur un fond marin (SB), le système de tuyau de descente comprenant un tuyau de descente sensiblement tubulaire, dans lequel le système de tuyau de descente comprend une flottabilité fournie de sorte que pendant l'utilisation, elle soit disposée le long du tuyau de descente pour compenser au moins partiellement un poids du système de tuyau de descente, le système de tuyau de descente (100) comprenant des sections de tuyau de descente (110) sensiblement tubulaires construites et agencées pour constituer le tuyau de descente, la flottabilité étant associée à une ou plusieurs sections de tuyau de descente, **caractérisé en ce que** la flottabilité est fournie par des microsphères (114) intégrées dans la (les) section(s) de tuyau de descente, les microsphères ayant un poids spécifique effectif inférieur au poids spécifique de l'eau.

2. Système de tuyau de descente selon la revendication 1, dans lequel la flottabilité est fournie par des microsphères (114) intégrées dans la (les) section(s) de tuyau de descente, les microsphères comprenant des microsphères creuses (114), en particulier des microsphères de verre creuses (114).

3. Système de tuyau de descente selon la revendication 1 ou 2, dans lequel la flottabilité est fournie de sorte que, pendant l'utilisation, elle est répartie le long du tuyau de descente.

4. Système de tuyau de descente selon l'une quelconque des revendications précédentes, dans lequel les une ou plusieurs sections de tuyau de descente (110) avec la flottabilité associée comprennent la flottabilité intégrale, la flottabilité intégrale étant prévue de manière solidaire avec la (les) section(s) de tuyau de descente respectives.

5. Système de tuyau de descente selon l'une quelconque des revendications précédentes, dans lequel la flottabilité est principalement fournie, pendant l'utilisation, dans une moitié supérieure de la (des) section(s) de tuyau de descente (110).

6. Système de tuyau de descente selon la revendication 5, dans lequel la flottabilité est fournie, pendant l'utilisation, au niveau d'un bord supérieur de la (des) section(s) de tuyau de descente (110).

7. Système de tuyau de descente selon l'une quelconque des revendications précédentes, dans lequel la (les) section(s) de tuyau de descente (110) comprend (comprennent) un collier (112) autour de la (des) section(s) de tuyau de descente, la flottabilité étant fournie dans le collier.

8. Système de tuyau de descente selon l'une quelconque des revendications précédentes, dans lequel la (les) section(s) de tuyau de descente (110) comprennent un matériau de polyéthylène.

9. Système de tuyau de descente selon l'une quelconque des revendications précédentes, dans lequel les sections de tuyau de descente (110) comprennent des seaux sans fond (111) ayant un côté supérieur et un côté inférieur, un périmètre externe du côté inférieur étant plus petit qu'un périmètre interne du côté supérieur, et le système de tuyau de descente (100) comprend un agencement de levage (130) auquel les seaux sont fixés, de sorte que pendant l'utilisation, un côté supérieur d'une section de tuyau de descente recouvre un côté inférieur d'une section de tuyau de descente adjacente et les côtés inférieurs ont tendance à être orientés dans une direction descendante.

10. Système de tuyau de descente selon la revendication 9, dans lequel les seaux (111) ont une forme sensiblement conique.

11. Système de tuyau de descente selon la revendication 9 ou 10, dans lequel l'agencement de levage (130) comprend au moins un câble ou une chaîne (120) auquel (à laquelle) les seaux (111) sont fixés, et/ou le système de tuyau de descente (100) comprend des chaînes ou des câbles (120) interconnectant les seaux adjacents.

12. Système de tuyau de descente selon l'une quelconque des revendications précédentes, dans lequel le système de tuyau de descente (100) comprend un agencement d'entraînement (140) pour déplacer, pendant l'utilisation, une extrémité inférieure du tuyau de descente dans une direction sensiblement le long du fond marin (SB).

13. Navire (10) comprenant un système de tuyau de descente (100) selon l'une quelconque des revendications précédentes.

14. Procédé de mise en place de rochers en mer pour placer des blocs de pierre et/ou de roche sur un fond marin (SB), dans lequel le procédé comprend les étapes consistant à :
prévoir un système de tuyau de descente (100) comprenant un tuyau de descente sensiblement tubulaire, le système de tuyau de descente comprenant la flottabilité fournie de sorte que, pendant l'utilisation, elle est agencée le long du tuyau de descente afin de compenser au moins partiellement un poids du système de tuyau de descente, le système de tuyau de descente étant un système de tuyau de descente selon l'une quelconque des revendication 1 à 12 ;
prévoir le système de tuyau de descente sur un navire (10) ;
déplacer le navire vers un emplacement en mer où les blocs de pierre et/ou de roche (R) doivent être placés sur le fond marin (SB) ; et
fournir des blocs de pierre et/ou de roche (R) dans un emplacement sur le fond marin à l'aide du système de tuyau de descente (100).
